(19) Europäisches Patentamt
European Patent Office
Office européen des brevets

(11) **EP 3 330 681 B1**

(12) **EUROPEAN PATENT SPECIFICATION**

(45) Date of publication and mention
of the grant of the patent:
**05.07.2023 Bulletin 2023/27**

(21) Application number: **16202065.5**

(22) Date of filing: **02.12.2016**

(51) International Patent Classification (IPC):
*G01F 23/00* *(2022.01)*      *G01F 23/16* *(2006.01)*
*G01F 23/80* *(2022.01)*      *G01F 23/18* *(2006.01)*

(52) Cooperative Patent Classification (CPC):
**G01F 23/162; G01F 23/0038; G01F 23/18;
G01F 23/804**

(54) **DETERMINING FLUID DENSITY WITHIN A TANK**

BESTIMMUNG DER FLÜSSIGKEITSDICHTE IN EINEM TANK

DÉTERMINATION DE LA DENSITÉ D'UN FLUIDE À L'INTÉRIEUR D'UN RÉSERVOIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.06.2018 Bulletin 2018/23**

(73) Proprietor: **Simmonds Precision Products, Inc.
Vergennes, VT 05491 (US)**

(72) Inventors:
• **Quartarone, Giusi
Mayfield, Cork (IE)**

• **Foley, Raymond
County Cork (IE)**

(74) Representative: **Dehns
St. Bride's House
10 Salisbury Square
London EC4Y 8JD (GB)**

(56) References cited:
**EP-A2- 1 153 784      US-A1- 2013 054 159
US-A1- 2015 052 997      US-A1- 2015 100 253**

**Description**

TECHNICAL FIELD

The present disclosure relates generally to methods of gauging a fluid within a tank and particularly to methods of determining fluid density within the tank using pressure measurements. In some embodiments, the present disclosure relates to methods of determining fuel density within an aircraft fuel tank.

BACKGROUND

There are various situations where it may be desired to measure one or more properties of a fluid within a tank and/or to gauge the amount of fluid within the tank. For example, it may be desired to gauge the amount of fuel within an aircraft fuel tank in order to determine when and to what extent the aircraft must be refuelled.

Accurately gauging the fuel within an aircraft fuel tank can present certain difficulties, especially due to the changes in orientation or attitude of the fuel tank during the flight of the aircraft. The temperature and the composition of the fuel may also vary across the tank, e.g. dependent on proximity to the motors, or where the aircraft has been fuelled with different types of fuel, which may not mix well. The changes in attitude of the tank also mean that the regions of different temperatures/fuel composition may move around the tank. It will be appreciated that these difficulties may be quite specific to aircraft fuel tanks, and do not necessarily apply, or at least not to the same extent, to fuel tanks in other motor vehicles such as cars.

In some conventional fluid gauging systems, capacitive type sensing probes are used wherein the capacitance of the probe changes in proportion to the amount of fluid in the tank, due to the different dielectric constants of the fluid and air. Since the dielectric constant of the air is typically lower than that of the fluid (e.g. where the fluid is a fuel), the probe exhibits a lower capacitance when partially submerged in the fluid compared to a totally submerged probe. However, when the fluid reaches the top of the probe, the probe becomes inactive, as the output will then remain the same regardless of the amount of fuel in the tank.

To overcome this limitation, it is known to conceptually divide the tank into a number of sub-volumes each having a respective probe. Thus, multiple probes must be installed within the tank, and the installation and replacement time may be relatively high. For example, in a typical passenger aircraft, more than 30 probes may need to be installed within the fuel tank(s), with an installation time of tens of hours.

It is also known to use pressure sensors for gauging fluid. However, again, conventional approaches may require a large number of individual pressure sensors to be installed. US 2015/0100253 describes an aircraft fluid gauging technique using pressure measurements from an integrated pressure sensor assembly having two pressure sensors mounted to a support member.

In order to accurately gauge the fluid within the tank, it may be useful to first determine the density of the fluid. The density of the fluid may also be of interest in itself, e.g. for performance analysis and/or diagnostic purposes. In some known approaches, including those described in US 2015/0100253, the fuel density may be measured using a dedicated densitometer installed within the tank. In other known approaches, an assumed or expected value may be used.

US2013/054159 A1 describes a method and system for detecting a fluid level within a fluid vessel by disposing a wireless fluid sensor module in the fluid vessel.

EP1153784 A2 describes a pair of solid state pressure sensors disposed near the bottom of a fuel tank and vertically spaced with one a unit distance above the other and used to compute the density from the difference in pressure sensed by the pair of sensors.

US2015/052997 A1 describes an interface measuring device for ascertaining the height of an interface between a first phase of a medium with a first density and a second phase of a medium with a second density.

SUMMARY

From a first aspect there is provided a method of determining a density of a fluid within an aircraft fuel tank as claimed in claim 1.

It will be appreciated that the first and second locations are generally known locations. For instance, the position(s) at which the pressure sensors or clusters are installed will generally be known and/or pre-determined such that they can be used in the determination of the fluid density. The method may further comprise installing a third or further cluster of sensors within the tank and obtaining a third or further pressure measurement using the third or further cluster of sensors.

The method may comprise determining a distribution of fluid density within the tank by installing a plurality of clusters of sensors at a plurality of different locations throughout the tank, and determining the fluid density at each of the locations using pressure measurements obtained from first and second pressure sensors of each respective cluster of sensors.

The method may comprise determining an orientation of the fuel tank and/or the cluster of sensors relative to the fluid surface. Optionally the method may comprise determining the distance between the first and second pressure sensors or between the first and second locations, measured in a direction perpendicular to the surface of the fluid, based on the determined orientation of the fuel tank and/or cluster. One or more sensors and/or processors may be provided for determining the orientation of the fuel tank and/or the cluster of sensors relative to the fluid surface.

The method may further comprise determining a volume, mass or level of fluid within the tank using the determined fluid density.

The density of the fluid, $\rho$, may be determined using a relationship, $\rho = \frac{p_1 - p_2}{a h_s}$ , where $p_1$ and $p_2$ are pressure measurements obtained at two different positions within the tank, $h_s$, is the distance between the two positions measured in a direction perpendicular to the surface of the fluid, and the fluid is subject to an acceleration, $a$.

The method comprises the steps of claim 1. From another aspect there is provided a pressure gauging system for determining the density of fluid within a tank such as an aircraft fuel tank as claimed in claim 8.

In accordance with any of the aspects or embodiments disclosed herein, each pressure sensor may comprise a solid state and/or micro-electro-mechanical system ("MEMS") pressure sensor.

In accordance with any of the aspects or embodiments disclosed herein, each cluster of sensors may comprise a substantially closed housing, wherein the plurality of sensors are mounted within the housing, and wherein the at least two pressure sensors have a pressure sensing surface that forms part of the exterior surface of the housing.

The housing may also contain suitable electrical circuitry for supplying power and/or for receiving measurement data from the plurality of sensors. In embodiments, the plurality of sensors may share common circuitry. For example, the cluster of sensors may have a single input/output cable, or a single input and a single output cable.

The housing may optionally also contain one or more other sensors, one or more data storage devices, one or more processors for processing measurement data, one or more transmitters for transmitting measurement data to an external processor or storage device.

BRIEF DESCRIPTION OF THE DRAWINGS

Various embodiments will now be described, by way of example only, and with reference to the accompanying drawings in which:

> Fig. 1 illustrates a fuel gauging system and a method of determining fuel density using the fuel gauging system;
> Fig. 2 illustrates a cluster of sensors that may be used within a system like that shown in Fig. 1;
> Fig. 3 illustrates the cluster of sensors of Fig. 2, but arranged with a different attitude relative to the fuel surface; and
> Fig. 4 illustrates a cluster of sensors according to another embodiment that may suitably be used for the techniques described herein.

DETAILED DESCRIPTION

According to the present disclosure, a plurality of sensors are installed together in a single package, or "cluster". A cluster of sensors therefore comprises a plurality of sensors mounted within a common housing. The cluster may also contain any associated electronics or electrical connections or wiring for the sensors, and optionally various processing circuitry, or transmission circuitry for transmitting measurements to an external processor. The cluster may thus be sold to a user effectively as a "black box" ready for immediate installation into a fluid tank, having all of the desired components pre-packaged and pre-arranged inside.

Because a plurality of components are clustered together prior to installation, ready for installation as a single package, the installation and maintenance time for the components may be significantly reduced as the multiple sensors within each cluster can be installed simultaneously, essentially in a single step. For instance, the installation time for a cluster of sensors may be substantially the same as the installation time for an individual sensor. Similarly, because the sensors within the cluster may share common electrical or electronic components, the wiring for the sensor may be simpler (and the installation time shorter) than the wiring required for installing the same number of sensors individually. For instance, a single wire bundle may be routed to the cluster, thus reducing the number of wire mounts or hangers required for the plurality of sensors. Furthermore, because the various sensors and wiring may be packaged together outside of the tank, prior to installation, it is relatively easy to control the relative positions of the sensors, and there is a reduced risk of misalignment due to installation errors. The clustering may also therefore serve to increase the accuracy of the measurements obtained using the sensors.

The techniques disclosed herein for determining fluid density rely on pressure measurements of the fluid. A cluster of sensors according to the present disclosure comprises two or more pressure sensors packaged together. A density of the fluid may thus be determined using the pressure measurements obtained by one or more pressure sensor of the cluster of sensors. By determining a density of the fluid using the obtained pressure measurements, it will be understood that the fluid density may be determined based at least in part on a pressure measurement obtained by one or more pressure sensors of the cluster. The fluid density may be determined using the pressure measurement in combination with e.g. other pressure measurements, or other measured or known properties of the system/fluid.

Pressure measurements may be particularly suitable in this context because the pressure exerted anywhere in an uncompressed fluid, such as the fluid within the tank, is transmitted equally in all directions through the fluid. Pressure sensors can therefore work for the entire volume range of the tank, such that it may no longer be necessary to conceptually split the fuel tank into a number of sub-volumes that are each measured individually.

The pressure sensors may, at least in some embodiments, comprise MEMS pressure sensors as these have been found to have particularly suitable characteristics for use with the techniques described herein. However, the skilled person will be aware of various types of pressure sensors, and it will be appreciated that various suitable sensor types may be used with the techniques described herein.

It will be understood that in order to obtain a pressure measurement of the fluid, the cluster must be at least partially submerged in the fluid. That is, the location at which the cluster is installed must lie below the fluid level such that the pressure sensor(s), or at least the pressure sensing surfaces thereof, within the cluster are exposed to the fluid. Where the sensor is not exposed, no valid measurement of the fluid can be performed, and the pressure sensor will simply measure the ambient pressure in the tank. In this case, it may be determined that the fluid level is below the location of this pressure sensor. This information may also be used to help gauge the fluid level.

In embodiments, the clustering together of two or more pressure sensors may allow more accurate pressure measurements of the fluid to be obtained without increasing the installation time, or the accuracy of the individual sensors. For instance, the pressure measurements from the two or more pressure sensors within the cluster, which may all be associated with substantially the same first location, may be combined together to provide a higher signal, or higher signal-to-noise ratio. It will be appreciated that the pressure measurements from the different sensors within the cluster may be combined taking into account their relative orientations and distances to the fuel surface to provide a more accurate pressure measurement. Alternatively, or additionally, the fluid densities determined using each of the pressure measurements from the individual sensors within the cluster may be averaged or combined together to provide a more accurate fluid density determination. The measurements may be averaged or combined in various suitable ways to enhance the accuracy. Thus, by clustering at least two pressure sensors together, it is possible to achieve an increase in accuracy without having to increase the accuracy of the individual sensors themselves.

Furthermore, clustering two or more pressure sensors may provide a redundancy such that in the event of failure of one of the pressure sensors, it may still be possible to obtain pressure measurements associated with the first location.

In general, a cluster of sensors may comprise any number and kind of sensors. For instance, the cluster may comprise two, three, four or more, pressure sensors, wherein pressure measurements may be obtained independently from each of the pressure sensors within a cluster. The pressure measurements from each pressure sensor within a cluster may then be used in combination with pressure measurements from the other pressure sensors within the cluster or with pressure measurements from other pressure sensors within the tank in order to determine a fluid density.

It will be appreciated that all of the sensors within a cluster may be located in relatively close proximity (i.e. relative to the size of the tank). Typically, the cluster, and/or the spacing of the pressure sensors within the cluster, may be less than about 1 meter, for instance, between about 0.1 and 1 meters, such as between about 0.1 and 0.5 meters, dependent on the size of the tank. The relative positioning of the sensors within a single cluster may generally be well-defined and controlled during the manufacture of the cluster. For instance, if the cluster is installed such that one of the pressure sensors is located at a particular first location, the other pressure sensors within the cluster may be located relatively close to the first location, at a known and pre-determined distance away from the first location, such that the measurements may each be associated with each other. The measurements from the different sensors may be combined together, as mentioned above, in which case, the measurements may each be associated with an effective location, e.g. lying equidistant between the various sensors. Thus, by obtaining a pressure measurement at a certain location, it will be understood that the location may comprise a location where a pressure sensor is actually installed, or may comprise a location that may otherwise be associated with one or more pressure sensors.

The pressure measurement(s) obtained using the cluster of sensors may generally be used to determine various properties of the fluid including, but not limited to, fluid mass, fluid level and fluid volume. Thus, the methods and techniques disclosed herein may generally comprise a further step of determining a volume, mass or level of the fluid within the tank. This step may comprise using, at least in part, a density of the fluid determined using the pressure measurements.

Particularly, however, as mentioned above, the cluster of sensors is used to determine a density of the fluid within the tank. According to the techniques described herein, the density may be determined using the pressure measurements, thus avoiding the need to install a separate, and typically relatively expensive, densitometer.

For example, because multiple pressure sensors are packaged together within each cluster, a 'local' fluid density in the vicinity of each cluster may be determined using the pressure measurements obtained from the pressure sensors within a single cluster and the distance between the sensors within the cluster. That is, each cluster may by itself allow the fluid density in the vicinity of the cluster to be determined. In general, the relative positioning of the sensors within a particular cluster may be selected during the manufacture of the cluster and fixed with a high degree of accuracy. The distance between the sensors measured in a direction perpendicular to the surface of the fuel may then be determined based on knowledge of the relative positions of the sensors within the cluster and of the attitude or orientation of the tank and/or sensors relative to the surface of the fluid (e.g. as defined by the fluid/air boundary within the tank). Thus, where the first cluster of sensors comprises first and second spaced apart pressure sensors, the fluid density at the first location may be determined by determining the fluid density between the first and second pressure sensors using pressure measurements obtained from the first and second spaced apart pressure sensors and the distance between the first and second pressure sensors measured in a direction perpendicular to the surface of the fluid. Where a cluster comprises more than two, e.g. three or more, pressure sensors, it will be appreciated that a density may be determined between each pair of sensors within the cluster. These values may then be averaged to give the local fluid density at the location where the cluster is installed.

In the invention, a density is determined using the pressure measurement(s) obtained using a first cluster installed at a first location in combination with a pressure measurement obtained at a different location within the tank, e.g. a second location away from the first cluster. At least two clusters are distributed through the fluid tank, with the different clusters being installed at different spaced apart locations within the tank. Pressure measurements obtained from the different clusters are thus used in combination with the known or measured distance between the clusters (the distance being perpendicular to the fluid level) in order to determine what is effectively an average or 'global' fluid density within the tank, or more specifically within the region between the different clusters. The relative positions of the different clusters within the tank may be selected to ensure a sufficiently large measurement coverage across the volume of the tank whilst minimising the overall number of clusters that need to be installed. The relative positions may e.g. be substantially optimised based on empirical or theoretical considerations, or using simulations. The number and relative positions of the clusters within the tank may be selected to ensure that a sufficient number of clusters remain submerged (or remain submerged for as long as possible) as the fluid surface changes over time relative to the positions of the clusters/sensors either as the fluid is used up or due to changes in attitude or orientation of the fluid tank e.g. in an aircraft fuel tank due to the flight of the aircraft. Thus, second, and optionally third or further, clusters of sensors are installed at different respective locations within the tank to ensure maximum coverage. The fuel density may thus be determined using any or all of the pressure measurements from the first, second, third or further clusters of sensors. For instance, where three or more clusters of sensors are installed, the fluid density may be determined between the first and second clusters, between the second and third clusters, and between the first and third clusters, with these values being averaged to determine the fluid density within the tank. Additionally, providing further clusters allows a more detailed determination of the fluid density distribution within the tank.

In general, it will be appreciated any pair of pressure sensors within the tank may be used to determine a density of the fluid, as long as both sensors within the pair are submerged in the fluid. For instance, as described above, a fluid density may be determined using two pressure sensors within a single cluster and/or using two pressure sensors within different clusters. Thus, by installing multiple clusters of sensors at first and second locations within the tank, each cluster comprising at least two pressure sensors, it is possible to create a system that is capable of providing a large amount of information about the density and density distribution within the tank. For example, the local densities in the vicinity of each of the clusters (i.e. at or around the locations where the clusters are installed) may be determined using pairs of sensors from each individual cluster, with the local densities at the different locations then used to provide information about the distribution of fluid density within the tank. Furthermore, pressure measurements from each pressure sensor within a particular cluster may be combined in a pairwise manner with pressure measurements from each of the pressure sensors of the other clusters to additionally determine the fluid density between each of the clusters. Information regarding the local density around each of the clusters, or the fluid density distribution through the tank, may be highly complementary to the average density of the fluid in the tank, as determined between the different clusters. For instance, as explained below, the error associated with the fluid density determination may be inversely proportional to the spacing between the pressure sensors used to determine the fluid density. Using the pressure measurements obtained between the different spaced apart clusters may thus allow for the density to be determined with a relatively high accuracy. On the other hand, as the distance between the pressure sensors increases, the fluid density may no longer be uniform. Thus, knowledge of the density distribution may be useful in order to improve the confidence in the density determinations. Furthermore, as the distance between the pressure sensors increases, the probability of having the pressure sensors of the different clusters simultaneously submerged decreases. It is thus useful to be able to determine multiple fluid densities over different distances (i.e. between different pairs of sensors) within the tank.

The density distribution within the tank may therefore be a useful parameter to enhance the accuracy of measurements or estimations based on the fluid density, such as estimates of the fluid level or volume. However, knowledge of the density distribution may also be useful in itself e.g. for analysing performance and/or diagnosing faults within the tank.

The fluid tank is an aircraft fuel tank and the fluid is accordingly a fuel. It will be appreciated that the fuel within an aircraft fuel tank may exert a relatively wide range of pressures, in part due to the acceleration of the tank during flight of the aircraft. It will also be appreciated that aircraft fuel tanks are relatively large. In this context, it may therefore be especially important to increase the accuracy of the pressure measurements, whilst still minimising the overall installation time, *etc.* Furthermore, the fuel density distribution within an aircraft fuel tank would not be expected to be uniform due to the potential regions of different temperature/fuel composition and the movement of the fuel due to the changes in attitude of the tank during the flight.

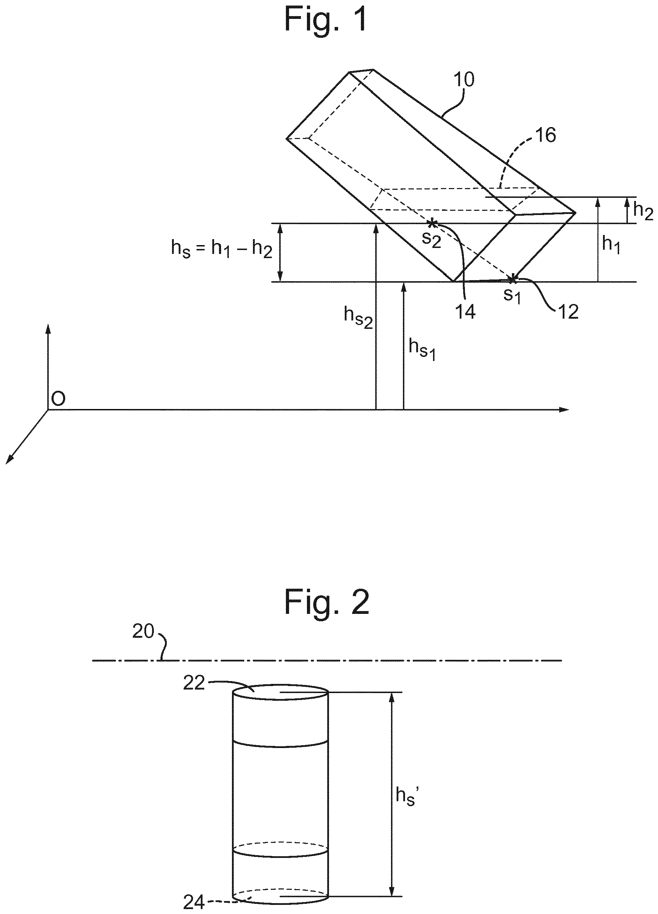

Fig. 1 illustrates a pressure gauging system according to the present disclosure for determining a fuel density within an aircraft fuel tank. As shown in Fig. 1, installed within the tank 10 at first and second fixed locations respectively are first 12 and second 14 clusters of sensors. Although Fig. 1 illustrates only first and second clusters, it will be appreciated that any number of clusters and/or pressure sensors may be installed within the tank 10. In general, the more sensors installed within the tank the greater the possible measurement coverage across the tank. However, by appropriately selecting the positions of the sensors within the tank, it is possible to ensure a large coverage whilst keeping the number of clusters reasonably low.

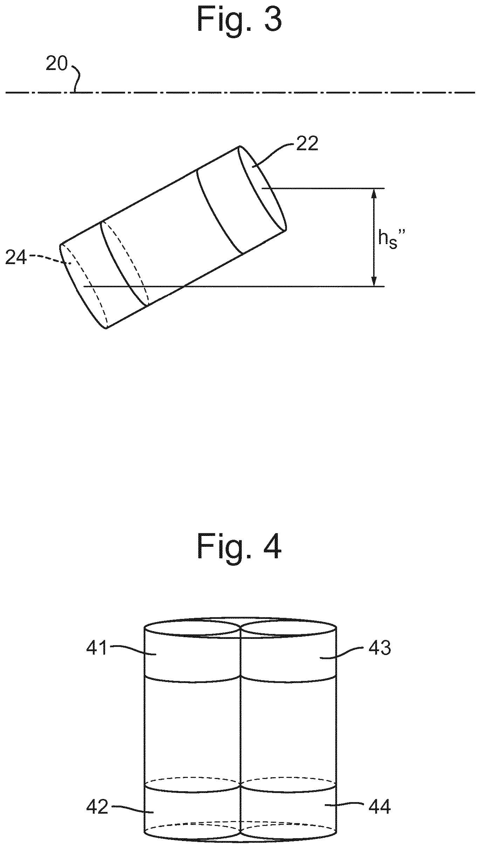

As explained above, each cluster of sensors comprises a plurality of sensors packaged together within a single housing, such that the cluster can be installed in a single step. The time to install a cluster may thus effectively be the same as the time to install a single sensor. The plurality of sensors comprises at least two pressure sensors mounted within the same package. A cluster of sensors comprising two pressure sensors 22,24 is illustrated in Figs. 2 and 3. However, it will be appreciated that any number of pressure or other sensors may be clustered together within a single package as desired. For instance, Fig. 4 shows a cluster of four pressure sensors 41,42,43,44 within a single package. As shown in the figures, the cluster may comprise a closed package, with the pressure sensing surfaces of the pressure sensors facing outwardly, such that they are exposed to fluid when the cluster is submerged. The electrical connections, and optionally any other sensors or processing circuitry may also be contained within the package. It will be appreciated that because the package is assembled prior to installation, it is relatively easy to control the relative positions of the various sensors and to ensure that the sensors are properly connected. It will also be appreciated that the electrical connections or wiring for the cluster may be less complex than for a plurality of separately installed sensors, as the sensors within each cluster may utilise common components or wiring. For instance, the cluster may comprise only a single input and/or output connection that is shared by each of the plurality of sensors to further facilitate the installation of the plurality of sensors. The use of a cluster may thus help to reduce installation error, as well as installation time.

Clustering multiple pressure sensors together into a single package may also allow an effective increase in the accuracy of the pressure measurements, without e.g. having to use more accurate (and expensive) sensors. Thus, the techniques described herein may in some embodiments allow the number of components that need to be installed within the tank to be reduced, whilst still allowing an accurate estimation of the fuel mass or density.

For instance, pressure measurements from different sensors within the cluster may be combined together, to provide a higher signal or signal-to-noise ratio. Alternatively, the measurements from the different sensors within each package may each be used in combination with measurements from sensors with other packages (installed at other locations) to give a plurality of density values, in the manner described below, with these density values then being averaged. Additionally, providing multiple pressure sensors within a single package helps ensure a degree of redundancy, such that in the event of failure of a single pressure sensor, pressure measurements may still be taken from other sensors within the cluster.

Thus, referring back to Fig. 1, the pressure sensor(s) of the first cluster 12 may provide a first pressure $p_1$ at the first location, while the pressure sensor(s) of the second cluster 14 may provide a second pressure pz at the second location. As shown in Fig. 1, the first 12 and second 14 pressure sensors are distributed across the volume of the tank 10 such that they are spaced apart by a certain (fixed) distance.

With the tank 10 oriented as shown in Fig. 1 and the fuel level shown in the same picture, both of the first 12 and second 14 clusters are fully submerged within the fuel, i.e. both lie below the surface of the fuel 16. Particularly, the pressure sensors of the first cluster 12 lie a first distance $h_1$ below the fuel surface 16 and the pressure sensors of the second cluster 14 lie a second distance $h_2$ below the fuel surface 16. The distance between the pressure sensors of the first and second clusters along the direction perpendicular to the fuel surface is thus $h_s = h_1 - h_2$.

The density of the fuel within the tank 10 may be estimated using the pressures at the first and second locations measured respectively by the pressure sensors of the first 12 and second 14 clusters, and the distance between the pressure sensors of the first and second clusters along the direction perpendicular to the fuel surface, $h_s$, as explained below.

Estimating Fuel Density Using Distributed Sensors

Let $p_1$ be defined as the pressure exerted over a unit area $s_1$ by a column of fuel $h_1$ with a density $\rho$, subject to an acceleration $a$ and ambient pressure $p_0$ (see e.g. Fig. 1, where the first sensor 12 is installed at the position of the first unit area $s_1$ and the second sensor 14 is installed at the position of the second unit area $s_2$)

$$p_1 = \rho a h_1 + p_0 \qquad \text{Equation (1)}$$

Similarly, the pressure exerted by the fuel over a unit area $s_2$ is

$$p_2 = \rho a h_2 + p_0 \qquad \text{Equation (2)}$$

where $a$ and $p_0$ do not depend on the location but rather on the external conditions, and wherein $\rho$ represents the average density between the two locations. Therefore,

$$\rho = \frac{p_1 - p_2}{a(h_1 - h_2)} = \frac{p_1 - p_2}{a h_s} = \frac{p_1 - p_2}{a(h_{s_1} - h_{s_2})} \qquad \text{Equation (3)}$$

where $h_s$ represents both the distance between the fuel heights $h_1$ and $h_2$ and the difference between the heights of unit areas $h_{s_1}$ and $h_{s_2}$ with respect to an external reference system (see Fig. 1).

Therefore, supposing to know the positions of the unit areas $h_{s_1}$ and $h_{s_2}$ (that will represent the positions where the sensors or clusters will be installed), the fuel density can be estimated.

In some embodiments, these values may then be used to estimate the fuel heights $h_1$ and $h_2$ that represent an indirect fuel quantity measurement.

Since the fuel surface changes direction with the aircraft acceleration, the distance between the sensors, $h_s$, along the direction perpendicular to the fuel surface also changes. In other words, both the quantity $h_s$ and the fuel density estimation accuracy change according to the tank attitude.

Below, a study is performed showing how the fuel density estimation accuracy changes according with the relative position of the sensors. This study represents a general rule rather than a specific methodology for the relative positioning of the sensors. Indeed, a specific rule for the design of a cluster cannot be provided, since it depends on the single pressure sensor accuracy, on the accuracy with which the aircraft acceleration (and hence attitude) is known or determined, on the fuel density accuracy target as well as on the fuel quantity estimation accuracy required by the application. Therefore, a detailed study and simulations of the system performance must be performed after the overall requirements and sensors accuracies have been defined, to correctly design a cluster of sensors.

When the accuracy of the sensors involved in the fuel density estimation is taken into account, the estimated density $\tilde{\rho}$ differs from the real one $\rho$ by a quantity $\pm e_p$. Indeed, the pressure measured by a sensor located over the area $s_i$ is $\tilde{p}_i = p_1 \pm e_p$, the acceleration is $\tilde{a} = a \pm e_a$ and the relative height distance between two sensors is $\tilde{h}_s = h_s \pm e_h$, where $e_p, e_a$ and $e_h$ are respectively the pressure sensor accuracy, the accuracy with which the acceleration is known or determined and the error in the evaluation of exact sensors position. Therefore

$$\pm e_\rho = \tilde{\rho} - \rho = \frac{\tilde{p}_1 - \tilde{p}_2}{\tilde{a}(\tilde{h}_{s_1} - \tilde{h}_{s_2})} - \frac{p_1 - p_2}{a(h_{s_1} - h_{s_2})} \qquad \text{Equation (4)}$$

$$\pm e_\rho = \tilde{\rho} - \rho = \frac{p_1 - p_2 \pm 2e_p}{(a \pm e_a)\,[(h_{s_1} - h_{s_2}) \pm 2e_h]} - \frac{p_1 - p_2}{a(h_{s_1} - h_{s_2})} \qquad \text{Equation (5)}$$

$$\pm e_\rho = \tilde{\rho} - \rho = \frac{p_1 - p_2}{(a \pm e_a)\,[(h_{s_1} - h_{s_2}) \pm 2e_h]} \pm \frac{2e_p}{(a \pm e_a)\,[(h_{s_1} - h_{s_2}) \pm 2e_h]} - \frac{p_1 - p_2}{a(h_{s_1} - h_{s_2})} \qquad \text{Equation (6)}$$

$$\lim_{(h_{s_1}-h_{s_2})\to\infty} \pm e_\rho =$$

$$\lim_{(h_{s_1}-h_{s_2})\to\infty} \frac{p_1-p_2}{(a\pm e_a)\left[(h_{s_1}-h_{s_2})\pm 2e_h\right]} \pm \frac{2e_p}{(a\pm e_a)\left[(h_{s_1}-h_{s_2})\pm 2e_h\right]} - \frac{p_1-p_2}{a(h_{s_1}-h_{s_2})} \qquad \text{Equation (7)}$$

The term

$$\frac{2e_p}{(a\pm e_a)\left[(h_{s_1}-h_{s_2})\pm 2e_h\right]}$$

tends to zero, as $(h_{s_1}-h_{s_2})$ tends to infinity, and the term

$$\frac{p_1-p_2}{(a\pm e_a)\left[(h_{s_1}-h_{s_2})\pm 2e_h\right]} \approx \frac{p_1-p_2}{a\left[(h_{s_1}-h_{s_2})\right]}$$

since the terms $e_h$ and $e_a$ can be ignored as $(h_{s_1}-h_{s_2})$ tends to infinity. Therefore:

$$\lim_{(h_{s_1}-h_{s_2})\to\infty} \pm e_\rho = 0 \qquad \text{Equation (8)}$$

Thus, it will be appreciated that the larger the relative distance between the two sensors responsible for determining the fuel density, the smaller the density estimation error. On the other hand, as this distance increases, the likelihood that the two sensors are simultaneously covered for small quantities of fuel decreases. The locations of the sensors must therefore be selected as a compromise between density estimation accuracy and fuel volume range for which the density can be estimated. Using multiple sensors distributed throughout the tank may increase the fuel volume range for which the density can be estimated.

Moreover, it can be seen that the density estimation error also depends on the pressure sensors and the accuracy with which the acceleration is known or measured.

Fuel Density Distributions Using Clusters

It will be appreciated that estimating the fuel density between two distributed sensors, or clusters of sensors, as described above in relation to Fig. 1, is effectively a measure of the average fluid density $\rho$ between the sensors, i.e. over the distance between the sensors, $h_{s_1}$ - $h_{s_2}$. Thus, the fluid density determined between two spaced-apart sensors may be considered as an average or 'global' density within the tank. In practice, the fluid density may not be uniform within the tank. Indeed, especially within an aircraft fuel tank which may contain regions of different temperature and/or fuel composition, and which regions may significantly move within the tank due to the changes in attitude of the tank during the flight of the aircraft, typically, the fluid density may not be uniform. It will be appreciated that the distribution of fuel density and range of pressure changes experienced within an aircraft fuel tank may therefore be very different to those of a fuel tank of other motor vehicles such as cars, where there will typically only be a single type of fuel, and fewer significant changes in attitude.

The use of clusters of sensors containing two or more spaced apart pressure sensors, e.g. as shown in Figs. 2, 3 and 4, however, means that each cluster may also be used to determine a fuel density by itself, in essentially the same manner described above. For instance, a cluster comprising at least a pair of simultaneously submerged pressure sensors, spaced apart by some fixed distance, may be used to estimate the density of fuel in the relatively small volume around the cluster, or specifically between the pair of pressure sensors within the cluster.

For example, referring back to Equations (1) to (3), the distance between the pressure sensors within a particular cluster will generally be known, or may be readily determined from the known spacing within the sensor and the current attitude or orientation of the tank. That is, as noted above, it is the distance along the direction perpendicular to the fuel surface 20 that is important. Thus, for instance, when the sensors are oriented perpendicularly to the fuel surface 20, as shown in Fig. 2, the distance, $h_s'$, may simply correspond to the known spacing between the sensors, as determined when designing the cluster. As the fuel tank tilts, the relevant distance may be reduced as shown in Fig. 3. The distance perpendicular to the fuel surface 20 in that case, $h_s''$, may then be determined based on knowledge or measurement using a suitable sensor of the attitude or orientation of the fuel tank or cluster relative to the fuel surface.

Thus, each cluster may be used to determine a 'local' fuel density in the vicinity of the cluster, i.e. in the region between the pressure sensors within the cluster. By installing multiple clusters at different locations throughout the tank, e.g. as shown in Fig. 1, it is possible therefore to determine not only the average fuel density between the different locations, but also the local fuel density at each of the different locations, and hence the fluid density distribution through the tank. As mentioned above, knowledge of the distribution of the fluid density may be useful for refining estimations of other properties, including fuel volume, and may also be used for analysis or diagnostic purposes.

Again, referring to Equations (4) to (8), the fluid density estimation error for each cluster depends on the relative spacing between the pressure sensors, as well as the individual pressure sensor accuracy. The number and type of pressure sensors within the cluster, and their relative positioning, may therefore be selected to reduce this error, subject to e.g. size and cost constraints. Because the sensors are clustered into a single package prior to installation it will be appreciated that there is generally more control over the relative positioning, *etc.* than if the sensors were to be installed individually. The final structure of the cluster depends both on characteristics of the selected sensors, and of the fuel tank itself, as well as the overall system accuracy. Therefore, the optimum structure of a cluster may be dependent on all of these variables, as well as on the final system accuracy target. In general, a higher fuel estimation accuracy may be achieved either by increasing the number of pairs of sensors (or pairs of sensors within the cluster), or by increasing the distance between the sensors normal to the fuel surface.

It will be appreciated that the use of clusters in the context of fuel gauging and/or determining fuel density may therefore provide various advantages. For instance, in some embodiments, by clustering multiple pressure sensors together, a higher measurement accuracy may be achieved without increasing the accuracy of the pressure sensors themselves. Furthermore, the installation time may be reduced relative to the time to install a similar number of sensors individually, since the time to install a cluster of sensors may be the same or similar to the time to install an individual sensor. At least in some embodiments the installation requirements may also be simplified, e.g. as the wiring complexity of a cluster may be lower than the wiring complexity for a plurality of individual components. The clustering also allows the relative positions of the sensors within the package to be well-controlled, such that in some embodiments the cluster by itself may be used to determine a fuel density. By appropriate selection of the number and positions of the sensors within a cluster, the cluster may therefore provide a high-performance device capable of implementing relatively complex functionalities.

## Claims

1.　A method of determining a density of a fluid within an aircraft fuel tank (10), the method comprising:

　　obtaining from a first cluster of sensors (12) installed at a first location ($s_1$) within the tank a first pressure measurement of the fluid within the tank, wherein the first cluster of sensors comprises a first plurality of sensors including at least two spaced-apart pressure sensors (22, 24), and wherein the first plurality of sensors within the first cluster of sensors are packaged together within a common housing such that the first plurality of sensors can be simultaneously installed at the first location as a single package;

　　obtaining from a second cluster of sensors (14) installed at a second location ($s_2$) within the tank a second pressure measurement of the fluid within the tank, the second cluster of sensors comprising a second plurality of sensors including at least two spaced-apart pressure sensors (22, 24) packaged together within a common housing such that the second plurality of sensors can be simultaneously installed at the second location as a single package, wherein the second location at which the second cluster of sensors (14) is installed is different from and spaced apart from the first location at which the first cluster of sensors (12) is installed; and

　　using the obtained first and second pressure measurements and the distance between the first and second locations, measured in a direction perpendicular to the surface of the fluid (16), to determine the fluid density within the tank between the first and second locations.

2.　The method of claim 1, comprising further determining the fluid density at said first location by determining the fluid density between said first and second pressure sensors using pressure measurements obtained from said first and second spaced apart pressure sensors and the distance between said first and second pressure sensors measured in a direction perpendicular to the surface of the fluid (16).

3.　The method of any preceding claim, comprising determining a distribution of fluid density within the tank by installing a plurality of clusters of sensors (12, 14) at a plurality of different locations throughout the tank, and determining the fluid density at each of said locations using pressure measurements obtained from first and second pressure sensors of each respective cluster of sensors.

4. The method of any preceding claim, comprising determining an orientation of the fuel tank and/or the cluster of sensors relative to the fluid surface (16), and optionally determining the distance between said first and second sensors or between said first and second locations, measured in a direction perpendicular to the surface of the fluid, based on the determined orientation of the fuel tank and/or cluster.

5. The method of any preceding claim, further comprising determining a volume or level of fluid within the tank using the determined fluid density.

6. The method of any preceding claim, wherein the density of the fluid, $\rho$, is determined using a relationship, $\rho = \frac{p_1 - p_2}{a h_s}$, where $p_1$ and $p_2$ are pressure measurements obtained at two different positions within the tank, $h_s$, is the distance between said two positions measured in a direction perpendicular to the surface of the fluid (16), and the fluid is subject to an acceleration, $a$.

7. The method of any preceding claim, comprising:

   installing said first cluster of sensors (12) at said first location within the tank;
   installing said second cluster of sensors (14) at said second location within the tank;
   obtaining pressure measurements of the fluid using the pressure sensors of the first and second clusters of sensors;
   determining a density of the fluid at said first location by determining the density of the fluid between a pair of pressure sensors of the first cluster of sensors;
   determining a density of the fluid at said second location by determining the density of the fluid between a pair of pressure sensors of the second cluster of sensors; and
   determining a density of the fluid between said first and second locations using pressure measurements obtained from the first and second cluster of sensors.

8. A pressure gauging system for determining the density of fluid within an aircraft fuel tank, the system comprising:

   at least first and second clusters of sensors (12, 14) that are designed to be installed at respective different locations ($s_1$, $s_2$) within the tank,
   wherein the first cluster of sensors (12) comprises a first plurality of sensors including at least two spaced-apart pressure sensors (22, 24), wherein the first plurality of sensors within the first cluster of sensors are packaged together within a common housing as a single package such that the first plurality of sensors can be installed simultaneously as part of a single installation operation, and
   wherein the second cluster of sensors (14) comprises a second plurality of sensors including at least two spaced-apart pressure sensors (22, 24), wherein the second plurality of sensors within the second cluster of sensors are packaged together within a common housing as a single package such that the second plurality of sensors can be installed simultaneously as part of a single installation operation;
   the system further comprising:
   one or more processors for receiving pressure measurements of the fluid from the pressure sensors of the first and second clusters of sensors (12, 14), and processing the received measurements to determine a density of the fluid at and between the respective locations of the first and second clusters of sensors (12, 14).

9. The system of claim 8, comprising a sensor for determining an orientation of the fuel tank and/or the cluster of sensors relative to the fluid surface (20).

10. An aircraft or aircraft fuel tank comprising a system as claimed in claim 8 or 9.

11. A method as claimed in any of claims 1 to 7, a system as claimed in claim 8 or 9, or an aircraft or aircraft fuel tank as claimed in claim 10, wherein each pressure sensor comprises a solid state and/or micro-electro-mechanical system ("MEMS") pressure sensor.

12. A method as claimed in any of claims 1 to 7 or 11, a system as claimed in claim 8, 9, or 11, or an aircraft or aircraft fuel tank as claimed in claim 10 or 11, wherein each cluster of sensors comprises a substantially closed housing, wherein the plurality of sensors are mounted within the housing, and wherein the at least two pressure sensors have a pressure sensing surface that forms part of the exterior surface of the housing.

**Patentansprüche**

1. Verfahren zum Bestimmen einer Dichte einer Flüssigkeit in einem Luftfahrzeugtreibstofftank (10), wobei das Verfahren umfasst:

   Erhalten einer ersten Druckmessung der Flüssigkeit in dem Tank von einem ersten Cluster von Sensoren (12), das an einem ersten Ort ($s_1$) in dem Tank installiert ist, wobei das erste Cluster von Sensoren eine erste Vielzahl von Sensoren umfasst, die mindestens zwei voneinander beabstandete Drucksensoren (22, 24) umfasst, und wobei die erste Vielzahl von Sensoren in dem ersten Cluster von Sensoren zusammen in einem gemeinsamen Gehäuse untergebracht ist, sodass die erste Vielzahl von Sensoren gleichzeitig an dem ersten Ort als ein einziges Paket installiert werden kann;
   Erhalten einer zweiten Druckmessung der Flüssigkeit in dem Tank von einem zweiten Cluster von Sensoren (14), das an einem zweiten Ort ($S_2$) in dem Tank installiert ist, wobei das zweite Cluster von Sensoren eine zweite Vielzahl von Sensoren umfasst, die mindestens zwei voneinander beabstandete Drucksensoren (22, 24) umfasst, die zusammen in einem gemeinsamen Gehäuse untergebracht ist, sodass die zweite Vielzahl von Sensoren gleichzeitig an dem zweiten Ort als ein einziges Paket installiert werden kann, wobei der zweite Ort, an dem das zweite Cluster von Sensoren (14) installiert ist, sich von dem ersten Ort, an dem das erste Cluster von Sensoren (12) installiert ist, unterscheidet und davon beabstandet ist; und
   unter Verwendung der erhaltenen ersten und zweiten Druckmessungen und des Abstands zwischen dem ersten und zweiten Ort, gemessen in einer Richtung senkrecht zu der Oberfläche der Flüssigkeit (16), um die Flüssigkeitsdichte in dem Tank zwischen dem ersten und zweiten Ort zu bestimmen.

2. Verfahren nach Anspruch 1, umfassend ferner Bestimmen der Flüssigkeitsdichte an dem ersten Ort durch Bestimmen der Flüssigkeitsdichte zwischen dem ersten und dem zweiten Drucksensor unter Verwendung von Druckmessungen, die von dem ersten und dem zweiten beabstandeten Drucksensor erhalten werden, und des Abstands zwischen dem ersten und dem zweiten Drucksensor, gemessen in einer Richtung senkrecht zu der Oberfläche der Flüssigkeit (16).

3. Verfahren nach einem der vorhergehenden Ansprüche, umfassend Bestimmen einer Verteilung der Flüssigkeitsdichte in dem Tank durch Installieren einer Vielzahl von Clustern von Sensoren (12, 14) an einer Vielzahl von verschiedenen Orten in dem Tank und Bestimmen der Flüssigkeitsdichte an jedem dieser Orte unter Verwendung von Druckmessungen, die von ersten und zweiten Drucksensoren jedes entsprechenden Clusters von Sensoren erhalten werden.

4. Verfahren nach einem der vorhergehenden Ansprüche, umfassend Bestimmen einer Ausrichtung des Kraftstofftanks und/oder des Clusters von Sensoren relativ zu der Flüssigkeitsoberfläche (16) und optional Bestimmen des Abstands zwischen dem ersten und dem zweiten Sensor oder zwischen dem ersten und dem zweiten Ort, gemessen in einer Richtung senkrecht zu der Oberfläche der Flüssigkeit, basierend auf der bestimmten Ausrichtung des Kraftstofftanks und/oder des Clusters.

5. Verfahren nach einem der vorhergehenden Ansprüche, ferner umfassend Bestimmen eines Flüssigkeitsvolumens oder -standes in dem Tank unter Verwendung der bestimmten Flüssigkeitsdichte.

6. Verfahren nach einem der vorhergehenden Ansprüche, wobei die Dichte des Fluids, $\rho$, unter Verwendung einer Beziehung, $\rho = \dfrac{p_1 - p_2}{a h_s}$, bestimmt wird, wobei $p_1$ und $P_2$ Druckmessungen sind, die an zwei verschiedenen Positionen in dem Tank erhalten wurden, $h_s$ der Abstand zwischen den beiden Orten ist, gemessen in einer Richtung senkrecht zu der Oberfläche der Flüssigkeit (16), und die Flüssigkeit einer Beschleunigung, a, ausgesetzt ist.

7. Verfahren nach einem der vorstehenden Ansprüche, umfassend:

   Installieren des ersten Clusters von Sensoren (12) an dem ersten Ort in dem Tank;
   Installieren des zweiten Clusters von Sensoren (14) an dem zweiten Ort in dem Tank;
   Erhalten von Druckmessungen der Flüssigkeit unter Verwendung der Drucksensoren des ersten und zweiten Clusters von Sensoren;
   Bestimmen einer Dichte der Flüssigkeit an dem ersten Ort durch Bestimmen der Dichte der Flüssigkeit zwischen einem Paar von Drucksensoren des ersten Clusters von Sensoren;

Bestimmen einer Dichte der Flüssigkeit an dem zweiten Ort durch Bestimmen der Dichte der Flüssigkeit zwischen einem Paar Drucksensoren des zweiten Clusters von Sensoren; und

Bestimmen einer Dichte der Flüssigkeit zwischen dem ersten und dem zweiten Ort unter Verwendung von Druckmessungen, die von dem ersten und dem zweiten Cluster von Sensoren erhalten werden.

8. Druckmesssystem zum Bestimmen der Dichte einer Flüssigkeit in einem Luftfahrzeugtreibstofftank, wobei das System umfasst:

mindestens ein erstes und ein zweites Cluster von Sensoren (12, 14), die dazu ausgelegt sind, an entsprechenden unterschiedlichen Orten ($s_1$, $S_2$) in dem Tank installiert zu werden,

wobei das erste Cluster von Sensoren (12) eine erste Vielzahl von Sensoren umfasst, die mindestens zwei voneinander beabstandete Drucksensoren (22, 24) beinhaltet, wobei die erste Vielzahl von Sensoren innerhalb des ersten Clusters von Sensoren in einem gemeinsamen Gehäuse als ein einziges Paket untergebracht ist, sodass die erste Vielzahl von Sensoren gleichzeitig als Teil einer einzigen Installationsoperation installiert werden kann, und

wobei das zweite Cluster von Sensoren (14) eine zweite Vielzahl von Sensoren umfasst, die mindestens zwei voneinander beabstandete Drucksensoren (22, 24) beinhaltet, wobei die zweite Vielzahl von Sensoren innerhalb des zweiten Clusters von Sensoren in einem gemeinsamen Gehäuse als ein einziges Paket untergebracht ist, sodass die zweite Vielzahl von Sensoren gleichzeitig als Teil einer einzigen Installationsoperation installiert werden kann;

wobei das Verfahren ferner umfasst:

einen oder mehrere Prozessoren zum Empfangen von Druckmessungen der Flüssigkeit von den Drucksensoren des ersten und zweiten Clusters von Sensoren (12, 14) und zum Verarbeiten der empfangenen Messungen, um eine Dichte der Flüssigkeit an und zwischen den entsprechenden Orten des ersten und zweiten Clusters von Sensoren (12, 14) zu bestimmen.

9. System nach Anspruch 8, umfassend einen Sensor zum Bestimmen einer Ausrichtung des Treibstofftanks und/oder des Clusters von Sensoren relativ zu der Flüssigkeitsoberfläche (20) .

10. Luftfahrzeug oder Luftfahrzeugtreibstofftank, umfassend ein System nach Anspruch 8 oder 9.

11. Verfahren nach einem der Ansprüche 1 bis 7, System nach Anspruch 8 oder 9 oder Luftfahrzeug oder Luftfahrzeugtreibstofftank nach Anspruch 10, wobei jeder Drucksensor einen Festkörper- und/oder mikroelektromechanischen System- ("MEMS") Drucksensor umfasst.

12. Verfahren nach einem der Ansprüche 1 bis 7 oder 11, System nach Anspruch 8, 9 oder 11 oder Luftfahrzeug oder Luftfahrzeugtreibstofftank nach Anspruch 10 oder 11, wobei jedes Cluster von Sensoren ein im Wesentlichen geschlossenes Gehäuse umfasst, wobei die Vielzahl von Sensoren innerhalb des Gehäuses montiert ist und wobei die mindestens zwei Drucksensoren eine Druckmessfläche aufweisen, die einen Teil der Außenfläche des Gehäuses bildet.

**Revendications**

1. Procédé de détermination d'une densité d'un fluide à l'intérieur d'un réservoir de carburant d'aéronef (10), le procédé comprenant :

l'obtention à partir d'un premier groupe de capteurs (12) installés à un premier emplacement ($s_1$) à l'intérieur du réservoir d'une première mesure de pression du fluide à l'intérieur du réservoir, dans lequel le premier groupe de capteurs comprend une première pluralité de capteurs comportant au moins deux capteurs de pression espacés (22, 24), et dans lequel la première pluralité de capteurs dans le premier groupe de capteurs sont rassemblés dans un boîtier commun de sorte que la première pluralité de capteurs puisse être installée simultanément au premier emplacement comme un seul ensemble ;

l'obtention à partir d'un second groupe de capteurs (14) installés à un second emplacement ($s_2$) à l'intérieur du réservoir d'une seconde mesure de pression du fluide à l'intérieur du réservoir, le second groupe de capteurs comprenant une seconde pluralité de capteurs comportant au moins deux capteurs espacés (22, 24) rassemblés dans un boîtier commun de sorte que la seconde pluralité de capteurs puisse être installée simultanément au second emplacement comme un seul ensemble, dans lequel le second emplacement auquel le second groupe de capteurs (14) est installé est différent et espacé du premier emplacement auquel le premier groupe de capteurs (12) est installé ; et

l'utilisation des première et seconde mesures de pression obtenues et de la distance entre les premier et second emplacements, mesurée dans une direction perpendiculaire à la surface du fluide (16), pour déterminer la densité de fluide à l'intérieur du réservoir entre les premier et second emplacements.

2. Procédé selon la revendication 1, comprenant en outre la détermination de la densité de fluide audit premier emplacement en déterminant la densité de fluide entre lesdits premier et second capteurs de pression en utilisant des mesures de pression obtenues à partir desdits premier et second capteurs de pression espacés et la distance entre lesdits premier et second capteurs de pression mesurée dans une direction perpendiculaire à la surface du fluide (16).

3. Procédé selon une quelconque revendication précédente, comprenant la détermination d'une distribution de densité de fluide à l'intérieur du réservoir en installant une pluralité de groupes de capteurs (12, 14) à une pluralité d'emplacements différents dans tout le réservoir, et la détermination de la densité de fluide à chacun desdits emplacements en utilisant des mesures de pression obtenues à partir de premier et second capteurs de pression de chaque groupe respectif de capteurs.

4. Procédé selon une quelconque revendication précédente, comprenant la détermination d'une orientation du réservoir de carburant et/ou du groupe de capteurs par rapport à la surface de fluide (16), et éventuellement la détermination de la distance entre lesdits premier et second capteurs ou entre lesdits premier et second emplacements, mesurée dans une direction perpendiculaire à la surface du fluide, sur la base de l'orientation déterminée du réservoir de carburant et/ou du groupe de capteurs.

5. Procédé selon une quelconque revendication précédente, comprenant en outre la détermination d'un volume ou d'un niveau de fluide à l'intérieur du réservoir en utilisant la densité de fluide déterminée.

6. Procédé selon une quelconque revendication précédente, dans lequel la densité de fluide, *p*, est déterminée à l'aide d'une relation, $\rho = \frac{p_1 - p_2}{a h_s}$, où $p_1$ et $p_2$ sont des mesures de pression obtenues à deux positions différentes à l'intérieur du réservoir, $h_s$, est la distance entre lesdites deux positions mesurées dans une direction perpendiculaire à la surface du fluide (16), et le fluide est soumis à une accélération, *a*.

7. Procédé selon une quelconque revendication précédente, comprenant :

l'installation dudit premier groupe de capteurs (12) audit premier emplacement à l'intérieur du réservoir ;
l'installation dudit second groupe de capteurs (14) audit second emplacement à l'intérieur du réservoir ;
l'obtention de mesures de pression du fluide à l'aide des capteurs de pression des premier et second groupes de capteurs ;
la détermination d'une densité du fluide audit premier emplacement en déterminant la densité du fluide entre une paire de capteurs de pression du premier groupe de capteurs ;
la détermination d'une densité du fluide audit second emplacement en déterminant la densité du fluide entre une paire de capteurs de pression du second groupe de capteurs ; et
la détermination d'une densité du fluide entre lesdits premier et second emplacements en utilisant des mesures de pression obtenues à partir des premier et second groupes de capteurs.

8. Système de jaugeage de pression pour déterminer la densité d'un fluide à l'intérieur d'un réservoir de carburant d'aéronef, le système comprenant :

au moins des premier et second groupes de capteurs (12, 14) qui sont conçus pour être installés à des emplacements respectifs différents ($s_1$, $s_2$) à l'intérieur du réservoir,
dans lequel le premier groupe de capteurs (12) comprend une première pluralité de capteurs comportant au moins deux capteurs de pression espacés (22, 24), dans lequel la première pluralité de capteurs dans le premier groupe de capteurs sont rassemblés dans un boîtier commun comme un seul ensemble de sorte que la première pluralité de capteurs puisse être installée simultanément dans le cadre d'une seule opération d'installation, et dans lequel le second groupe de capteurs (14) comprend une seconde pluralité de capteurs comportant au moins deux capteurs de pression espacés (22, 24), dans lequel la seconde pluralité de capteurs dans le second groupe de capteurs sont rassemblés dans un boîtier commun comme un seul ensemble de sorte que la seconde pluralité de capteurs puisse être installée simultanément dans le cadre d'une seule opération d'installation ; le système comprenant en outre :

un ou plusieurs processeurs pour recevoir des mesures de pression du fluide à partir des capteurs de pression des premier et second groupes de capteurs (12, 14), et traiter les mesures reçues pour déterminer une densité du fluide au niveau et entre les emplacements respectifs des premier et second groupes de capteurs (12, 14).

9. Système selon la revendication 8, comprenant un capteur pour déterminer une orientation du réservoir de carburant et/ou du groupe de capteurs par rapport à la surface de fluide (20).

10. Aéronef ou réservoir de carburant d'aéronef comprenant un système selon la revendication 8 ou 9.

11. Procédé selon l'une quelconque des revendications 1 à 7, système selon la revendication 8 ou 9, ou aéronef ou réservoir de carburant d'aéronef selon la revendication 10, dans lequel chaque capteur de pression comprend un capteur de pression à semi-conducteurs et/ou à microsystème électromécanique (« MEMS »).

12. Procédé selon l'une quelconque des revendications 1 à 7 ou 11, système selon la revendication 8, 9 ou 11, ou aéronef ou réservoir de carburant d'aéronef selon la revendication 10 ou 11, dans lequel chaque groupe de capteurs comprend un boîtier sensiblement fermé, dans lequel la pluralité de capteurs sont montés à l'intérieur du boîtier, et dans lequel les au moins deux capteurs de pression ont une surface de détection de pression qui fait partie de la surface extérieure du boîtier.

## Fig. 1

$$h_S = h_1 - h_2$$

## Fig. 2

# Fig. 3

# Fig. 4

**EP 3 330 681 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150100253 A
- US 2013054159 A1
- EP 1153784 A2
- US 2015052997 A1